# EUROPEAN PATENT SPECIFICATION

(11) **EP 3 749 866 B1**
(45) Date of publication and mention of the grant of the patent: **10.08.2022**
(21) Application number: 18705113.1
(22) Date of filing: 07.02.2018
(51) Int. Cl.: F16B 13/00, F16B 13/12, F16B 25/00, F16B 37/12

(54) **SELF-DRILLING WALL PLUG**
SELBSTBOHRENDER WANDDÜBEL
CHEVILLE MURALE AUTO-FOREUSE

(43) Date of publication of application: 16.12.2020
(73) Proprietor: Mungo Befestigungstechnik AG, 4600 Olten (CH)
(72) Inventor: PIROZZI, Massimo, 4600 Olten (CH)
(74) Representative: Eisenführ Speiser
(86) International application number: PCT/EP2018/053036
(87) International publication number: WO 2019/154485

(56) References cited:
- EP-A1- 0 165 674
- EP-A1- 1 669 615
- EP-A2- 1 298 331

## Description

The invention relates to a self-drilling wall plug for screwing in, according to the preamble of claim 1.

Such self-drilling wall plugs are known from the prior art. Publications EP 0 575 295 A, EP 0 874 165 A, EP 0 965 767 A, EP 0 165 674 A, EP 1 669 615 A and EP 1 298 331 A, for example, show such self-drilling wall plugs for screwing into lightweight building materials.

The object of the invention is to provide a self-drilling wall plug of the kind initially specified, which is an improvement on self-drilling wall plugs of the known kind.

This object is achieved by a self-drilling wall plug according to independent claim 1.

The cup disposed according to the invention in the tip region of the self-drilling wall plug, for receiving the front end of a fixing element penetrating the wall plug, allows the front end of the fixing element penetrating the wall plug, for example the front end of a screw which is screwed into the wall plug, to be guided in a specific manner for the first time ever.

A preferred embodiment of the invention is one in which the cup is substantially cone-shaped.

Another preferred embodiment of the invention is one in which substantially only one half of the cup is substantially cone-shaped.

Yet another preferred embodiment of the invention is one in which the cup is designed such that it resists a fixing element penetrating the wall plug with a greater cut-through resistance on a first side, in particular on a first half, than on a second side, in particular on the second half. It is possible in this way to specify systematically on which side a fixing element penetrating the wall plug, for example a screw screwed into it, cuts through the wall of the cup and is thus guided in a targeted manner onto a specific side or half of the cup which has a lower cut-through resistance.

A preferred embodiment of the invention is one in which the greater cut-through resistance is provided on the one side by a greater wall thickness of the cup compared to the other side. This also achieves the advantage that a fixing element penetrating the wall plug, for example a screw, breaks out of the cup, or breaks through the wall of the cup, on the side with the smaller wall thickness, when the front end of the fixing element penetrates the cup. In this way, the fixing element penetrating the cup is steered to a particular side, in this case to the side with the thinner wall thickness.

According to the invention a rotational axis of the cup is non-coaxial with a rotational axis of the wall plug. Due to the rotational axis of the cup being arranged non-coaxially, the overall orientation of the cup advantageously ensures that a front end of a fixing element screwed into the wall plug and penetrating the cup exits the wall plug to one side of the front tip of the wall plug.

According to the invention the rotational axis of the cup is arranged at an angle of preferably 5 to 10 degrees, even more preferably of approximately 6.5 degrees to the rotational axis of the wall plug. The aforementioned angular ranges have proved to be an optimal range within which it is possible to systematically deflect a front end of a fixing element penetrating the wall plug, while simultaneously ensuring that not too much resistance is given to the front end of the fixing element penetrating the wall plug.

A preferred embodiment of the invention is one in which the cup has at least two preferably non-rotationally symmetric areas on its inner surface. As a result of this inventive design of the inner surface of the cup, the front end of a fixing element penetrating the cup can be deflected in a particular direction, for example to prevent the front end of a fixing element penetrating the cup from striking from behind a pre-drilling element which is arranged on the front end of the wall plug.

A preferred embodiment of the invention is one in which at least two preferably substantially symmetrically arranged cutting teeth like milling tools are provided in the region of the front end comprising the tip. Improved cutting of board, for example of a plasterboard wall, is achieved with the help of such cutting teeth.

Another preferred embodiment of the invention is one in which the at least one cutting tooth has an outer surface which is substantially flush with an outer surface of the plug body, which does not have the thread. In this way, the capacity of the wall plug to cut through board, for example of a plasterboard wall, is systematically improved.

A preferred embodiment of the invention is one in which the at least one cutting tooth has a land which is offset. This provides more space for the borehole debris or plaster dust that is produced in that region, so that the borehole debris or plaster dust can be conveyed more easily into the rear region of the wall plug. This also results in the tip of the wall plug breaking off less easily.

A preferred embodiment of the invention is one in which one end of the longitudinal ribs of the inner profile, facing the tip, is arranged at a distance from the tip which is substantially equal to the distance to an end of the cutting thread facing the tip. The advantageous result of this positioning of the front end of the longitudinal ribs of the inner profile is that the insertion torque for a screw to be screwed into the wall plug is not too great, thus preventing any slippage of the wall plug. Compared to the longitudinal ribs known from the prior art, this positioning of the front end of the longitudinal ribs of the inner profile in accordance with the invention equates to offsetting the front end forwards towards the tip of the wall plug.

A preferred embodiment of the invention is one in which pivotable wall portions are provided in wall openings in the plug body, which have a region which projects into an interior space provided inside the inner wall of the plug body, such that the wall portions can be pressed outwards into an anchoring position by a fixing element penetrating the wall plug. This provides additional anchorage of the wall plug in the lightweight building material.

A preferred embodiment of the invention is one in which the wall portion, on at least the side facing the front end of the wall plug, has a linear notch running substantially circumferentially.

A preferred embodiment of the invention is one in which the linear notch forms a hinge-like connection, between the wall portion and the plug body, for an at least outwardly directed hinging motion of the wall portion.

Special embodiments of the invention shall now be described by way of example and with reference to the attached Figures, in which identical or functionally identical parts are marked with the same reference signs, and in which:
- Fig. 1: shows an overall perspective view of an embodiment of a wall plug according to the invention;
- Fig. 2: shows a cross-section through the wall plug of Fig. 1, the sectional plane being chosen such that the cutting tooth that can be seen on the upper side of the Figure lies behind the sectional plane and thus remains visible, whereas the cutting tooth on the lower side in Fig. 1 lies in front of the sectional plane and is therefore no longer visible;
- Fig. 3: shows an enlarged view of the cross-section shown in Fig. 2;
- Fig. 4: shows a side view of the wall plug shown in Figs. 1 - 3;
- Fig. 5: shows a partial section through a front section of the side view in Fig. 4, where the upper cutting tooth shown in Fig. 4 is in front of the sectional plane and is therefore invisible;
- Fig. 6: shows a perspective view of the cup of the wall plug shown in Figs. 1 - 5;
- Fig. 7: shows a perspective view of the wall plug shown in Figs. 1 - 6, viewed from an angle from the front, onto a front section of the wall plug compared to a corresponding view of a prior art wall plug, shown on the right;
- Fig. 8a: shows a top view onto the front end of wall plug 1 as shown in Figs. 1 - 6, with tip 12;
- Fig. 8b: shows a side view of the wall plug in Figs. 1 - 6, showing preferred dimensions and ratios of lengths;
- Fig. 8c: shows a partial view of the wall plug in Figs. 1 - 6 for showing preferred dimensioning; and
- Figs. 8d - 8g: show perspective partial views onto the front end of the wall plug in Figs. 1 - 6, with tip 12.

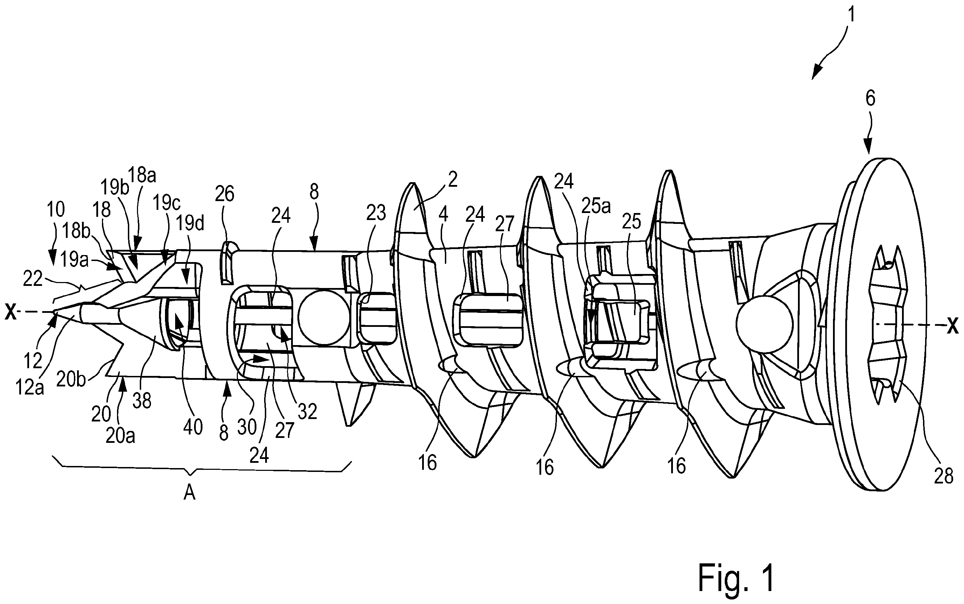

Fig. 1 shows a perspective view of a wall plug 1 according to a first embodiment of the invention. The wall plug 1 in Fig. 1 is a self-drilling wall plug 1 for screwing into lightweight building materials, such as plaster walls or the like. Wall plug 1 has a sleeve-shaped plug body 4 surrounded by a cutting thread 2. On its rear side, i.e. at its rear end shown on the right in the Figure, wall plug 1 has a flange 6 by means of which the wall plug 1 screwed substantially completely into a wall of the aforementioned kind supports itself at the surface of such a wall.

Viewed from right to left in Fig. 1, an outer surface or circumferential surface 8 of plug body 4 tapers slightly in a conical shape. Cutting thread 2 extends with approximately three turns over the larger part of the length of plug body 4 and ends at the front end, shown on the left in Fig. 1, a significant distance A from a front end 10 of wall plug 1, having a tip 12. Wall plug 1 thus has a front leading portion 14 of length A and free of cutting thread, by means of which wall plug 1 is guided in a hole which is prepared, in particular, by the front end 10 of wall plug 1 having tip 12. The flank angle of outer cutting thread 2 is relatively sharp, and the pitch angle is relatively small. Cutting thread 2 also has recesses 16 which open towards the circumferential surface 8 of plug body 4, and which serve, inter alia, as a means for conveying the borehole debris that is produced.

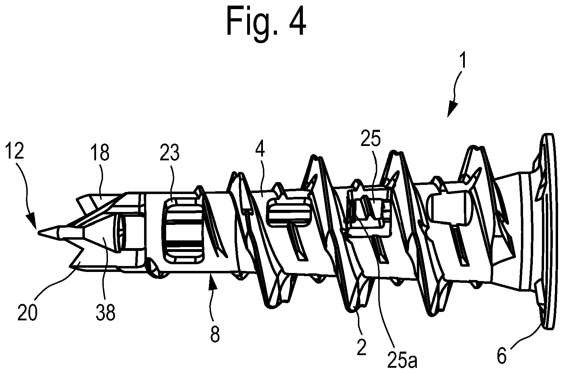

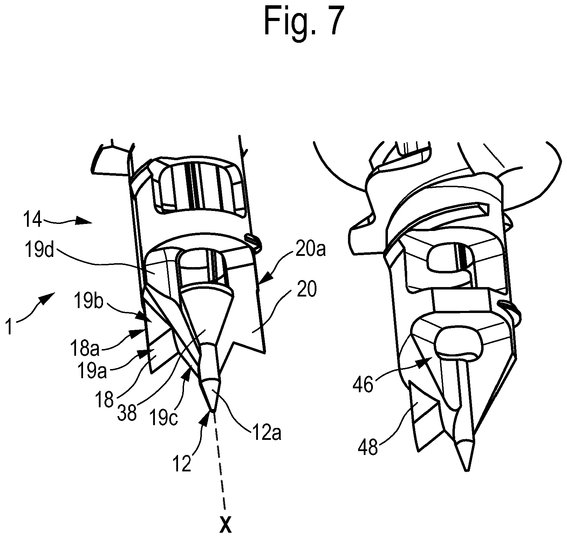

In the region of the front end 10 having tip 12, the wall plug 2 has two cutting teeth 18 and 20. Improved cutting of board, for example of a plasterboard wall, is achieved with the help of such cutting teeth 18, 20. As can be seen from Figs. 1, 4 and from the partial view shown on the left in Fig. 7, the two cutting teeth 18, 20 are preferably arranged substantially mirror-symmetrically to each other in relation to the rotational axis X of wall plug 1. Each of the two cutting teeth 18, 20 also has an outer side 18a, 20a, each of which is preferably substantially flush with the outer or circumferential surface 8 of plug body 4 which does not have the thread.

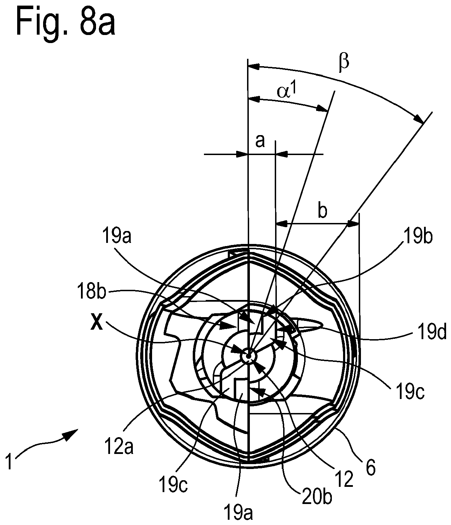

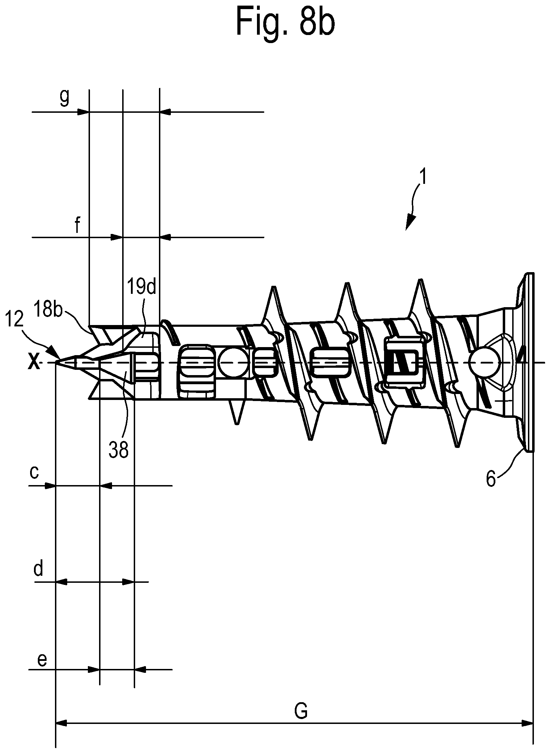

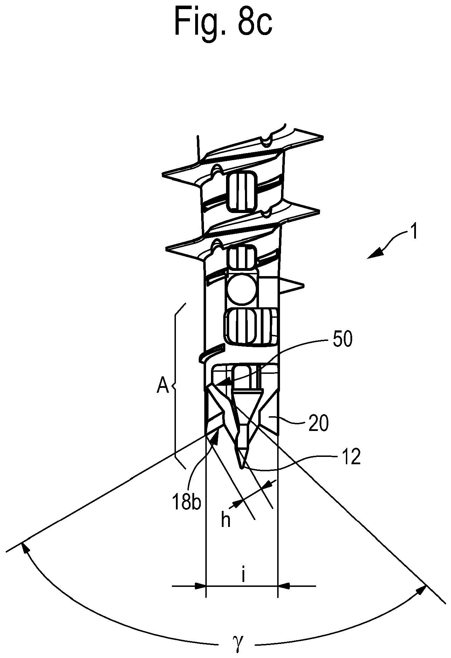

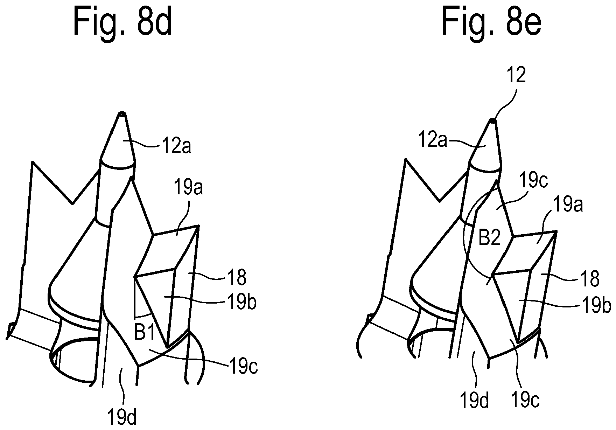

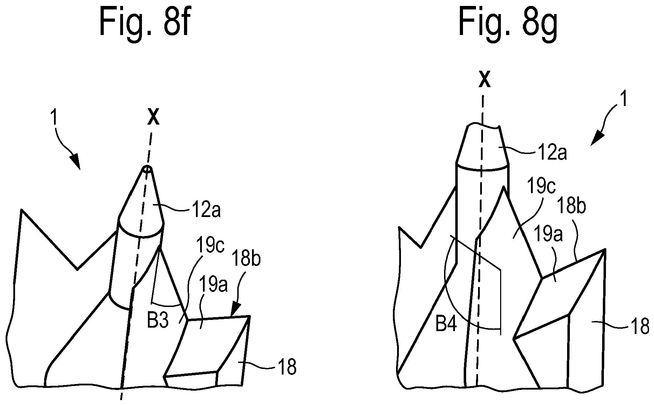

As can be seen from Fig. 1 and from Figs. 8, cutting teeth 18, 20 are also preferably arranged at a radial distance from rotational axis X, which is substantially equal to their radial extension perpendicular to rotational axis X.

In addition, cutting teeth 18, 20 as shown in Fig. 1, Fig. 7 and Figs. 8 preferably have a land consisting of sloping sections 19a and 19c, which preferably merge with straight sections 19b and 19d, i.e. with sections with extend parallel to rotational axis X. The first sloping section 19a of the land preferably lies immediately adjacent to cutting edge 18b, 20b of cutting tooth 18, 20. It is preferably adjoined immediately, looking towards flange 6, by the straight section 19b of the land, i.e. the section extending parallel to rotational axis X. Laterally from sections 19a and 19b of the land, the two sections 19a and 19b are preferably adjoined immediately by sloping section 19c of the land. However, section 19c preferably extends from immediately before straight section 19b - viewed from flange 6 - beyond section 19a, viewed from flange 6 along rotational axis X, towards the tip of wall plug 12, as can be seen well from Figs. 1 and 7. Straight section 19b preferably adjoins once again then, on the side of section 19c facing away from tip 12, i.e. on the side of section 19c facing towards flange 6.

The land of cutting teeth 18, 20, formed by sections 19a, 19b, 19c and 19d, thus has two ledges formed by straight sections 19b and 19d.

Other preferred geometrical relationships in the region of cutting teeth 18 and 20 and of lands 19a, 19b, 19c, 19d are described below with reference to Figs. 8.

To enable wall plug 1 according to the invention to be drilled or screwed directly into a wall of the kind initially specified, without previous use of a drilling tool, i.e. without having to pre-drill a hole, a stepped pre-drilling element 22 is provided at the front end 10 of hollow plug body 4. The stepping in pre-drilling element 22 is provided by two different sharp angles, with a smaller sharp angle of approximately 17 degrees relative to rotational axis X at the foremost part of pre-drilling element 22 and with a larger sharp angle of approximately 30 degrees relative to rotational axis X at the rear part of pre-drilling element 22. The part of the sloping section 19c of the land which extends from the cutting edge 18b, 20b towards tip 12 preferably forms the rear part of pre-drilling element 22, whereas the final, rotationally symmetric portion 12a of wall plug 1, ending at tip 12, preferably forms the foremost part of pre-drilling element 22.

With the help of pre-drilling element 22 and lateral cutting teeth 18 and 20, the borehole debris which is produced can be advantageously conveyed backwards into the interior of the hollow plug body 4. It has proved particularly advantageous and it is therefore preferred when the second ledge 19d of land 19a, 19b, 19c, 19d is formed not only straight, i.e. parallel to rotational axis X, but is also formed, even more preferably, such that its surface is mutually parallel with land section 19b which is closer to cutting edge 18b, 20b. This is because the borehole debris can be conveyed particularly efficiently in this way towards flange 6.

In order that the borehole debris or the borehole cuttings that ensue can enter the interior of plug body 4, the latter is designed to be open not only to the front end 10, but additionally has openings 24 in its wall. To further improve the transportation of the borehole debris into openings 24, the outer or circumferential surface 8 of plug body 4 is also provided with a conveying thread 26 which conveys the borehole debris from left to right in Fig. 1 when the inventive wall plug 1 is screwed in.

An outer diameter of cutting thread 2 is preferably twice as large as that of plug body 4, thus resulting in good anchoring of wall plug 1 in a soft building material, for example in a gypsum wall. Cutting thread 2 also supports the driving force when drilling into building material.

In wall openings 24 provided in the wall 23 of plug body 4, pivotable wall portions 25 are provided which have a region which projects into an interior space 27 provided inside the inner wall 30 of plug body 4, such that wall portions 25 can be pressed outwards into an anchoring position by a fixing element penetrating wall plug 1. Wall portions 25 are preferably in a region which extends from flange 6, measured along rotational axis X towards tip 12, between about 20% and about 30% of the plug length, more preferably between about 22% and about 26%, or between about 28% and about 38% of the plug length, and even more preferably between about 30% and about 34% of the plug length. In the preferred embodiment shown in Fig. 1, one wall portion 25 is arranged on one side of the wall plug at a position which lies at about 22% to about 26% of the plug length, whereas a wall portion 25 arranged on the opposite side of the wall plug is arranged at a position which lies at about 30% to about 34% of the plug length. The longitudinal extension of wall elements 25, measured in the direction of rotational axis X of wall plug 1, preferably amounts to approximately 6% to approximately 8% of the total length of the wall plug. The width of wall elements 25, measured in the circumferential direction of the wall plug, is preferably about 4% to about 7% of the total length of the wall plug.

Wall portion 25, on at least its side facing the front end 10 of wall plug 1, has a linear notch 25a running substantially circumferentially.

Linear notch 25a forms a hinge-like connection between wall portion 25 and plug body 4, for an at least outwardly directed hinging motion of wall portion 25.

In its flange 6, wall plug 1 has a recess 28 for engaging a driving tool. In the embodiment shown in Fig. 1, recess 28 is cross-slotted so that bit driving tools can be used that are well-known on the market. However, all other kinds of recess 28 for receiving matching driving tools are also conceivable.

Plug body 4 also has an inner profile formed by a plurality of longitudinal ribs 32 along its inner wall 30, into which the thread of a fixing element to be inserted into wall plug 1 can cut.

In the region of front end 10, preferably directly behind pre-drilling element 22, wall plug 1 according to the invention has a cup 28 for receiving a front end or a tip of a fixing element which penetrates wall plug 1. It is preferable that cup 38 is substantially cone-shaped. It is further preferred that substantially only one half of cup 38 is substantially cone-shaped. Cup 38 is also preferably designed such that it resists a fixing element penetrating wall plug 1 with a greater cut-through resistance on a first side, in particular on a first half, than on a second side, in particular on a second half. This greater cut-through resistance is preferably provided by cup 38 having a thicker wall thickness on the one side, preferably on its one half, than on the other side, preferably the other half.

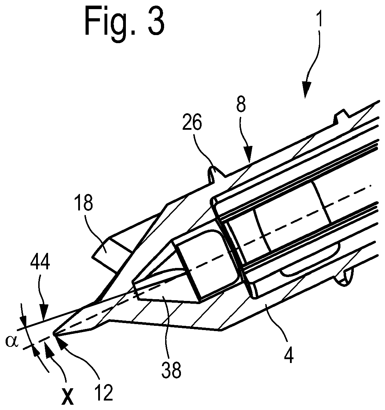

A rotational axis 44 of cup 38 is not coaxial with a rotational axis X of wall plug 1. Instead, and as shown in Fig. 3, the rotational axis 44 of cup 38 is arranged at an angle (α) of preferably 5 to 10 degrees, even more preferably of approximately 6.5 degrees to the rotational axis of wall plug 1. Due to the rotational axis 44 of cup 38 being slightly tilted relative to the rotational axis X of wall plug 1, a screw penetrating with its tip into cup 38 of wall plug 1 is guided to one side in a targeted manner, then guided outwards, preferably in a targeted manner, through the side with the thinner wall, by the tip of the screw then breaking through this thinner wall on the respective side.

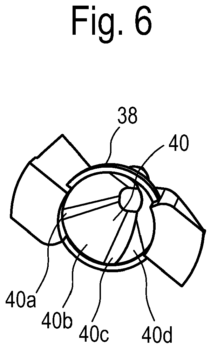

It is also preferable that cup 38 according to the invention can have a plurality of areas 40a, 40b, 40c, 40d on its inner surface 40, as shown in Fig. 6. These areas 40a - 40d are preferably not rotationally symmetric.

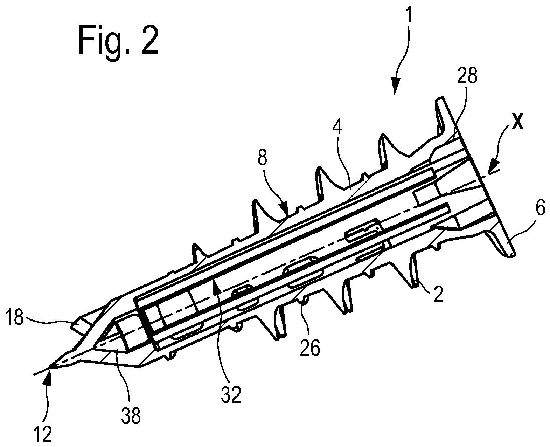

Fig. 2 shows a cross-section through wall plug 1 of Fig. 1, the sectional plane being chosen such that the cutting tooth 18 that can be seen on the upper side in Fig. 2 lies behind the sectional plane and thus remains visible, whereas cutting tooth 20 on the lower side in Fig. 1 lies in front of the sectional plane and is therefore no longer visible.

Fig. 3 shows an enlarged view of the cross-section shown in Fig. 2. It shows the angle α by which the rotational axis 44 of cup 38 is tilted relative to the rotational axis X of wall plug 1.

Fig. 4 shows a side view of the wall plug shown in Figs. 1 - 3.

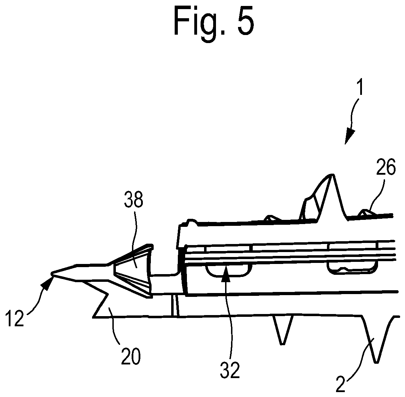

Fig. 5 shows a partial section through a front section of the side view in Fig. 4, where the upper cutting tooth 18 shown in Fig. 4 is in front of the sectional plane and therefore remains invisible.

Fig. 6 shows a perspective view of the cup of wall plug 1 shown in Figs. 1 - 5; in which areas 40a - 40d of the inner surface 40 of cup 38 can be seen well.

Fig. 7 shows a perspective view of the wall plug 1 shown in Figs. 1 - 6, viewed from an angle from the front, onto a front section 14 of the wall plug compared to a corresponding view of a prior art wall plug, shown on the right. It is clear from this view that the lower section 19d of the land of wall plug 1 according to the invention, shown on the left, differs from the land 46 of the prior art wall plug, shown on the right, in that section 19d in wall plug 1 according to the invention has a surface which is oriented parallel to the surface of section 19b of the land of cutting tooth 18 that lies further up, whereas the surface 46 of the land of the wall plug shown on the right is not parallel to the corresponding surface 48.

Fig. 8a shows a top view onto the front end of wall plug 1, with tip 12, as shown in Figs. 1 - 6. More particularly, Fig. 8a shows that the ledges or sections 19b and 19d extending perpendicularly to the plane of the paper in Fig. 8a, preferably have surfaces which are oriented mutually parallel to each other. Fig. 8a also shows the preferred position of land 19a offset from tip 12 and directly adjoining cutting edge 18b. Land 19a is preferably separated from cone of rotation 12a by the sloping land 19c that extends as far as the cone of rotation 12a underneath tip 12.

Fig. 8a also shows the distance a of the lowermost section 19d of the land from cutting edge 18b and the distance b of the lowermost ledge or section 19d of the land from the greatest outer periphery of wall plug 1 as defined by flange 6, likewise measured perpendicularly to cutting edge 18b. The sum of "a+b" is the radius of the largest outer diameter of wall plug 1, as measured at flange 6. The value for distance a is preferably between 20 and 30% of radius r=a+b. The value for b is preferably between about 70 and about 80% of radius r=a+b. The distance of the ledge or section 19b from cutting edge 18b is preferably about half of a. The opening angle α¹, viewed from the tip, between a line drawn from tip 12 or rotational axis X through cutting edge 18b, and a line drawn from tip 12 or rotational axis X through the most distant corner of land 19a is preferably between about 15 degrees and about 20 degrees, even more preferably about 18 degrees. Angle β between a line drawn from rotational axis X through cutting edge 18b, and the edge of the lowermost ledge or section 19d most distant from rotational axis X is preferably about 30 degrees to about 40 degrees, even more preferably about 37 degrees.

Similar measurements and dimensioning are likewise preferred, in mirror-symmetrical form relative to rotational axis X, for the design of cutting tooth 20 with cutting edge 20b and lands 19a, 19b, 19c and 19d.

Fig. 8b shows a side view of the wall plug in Figs. 1 - 6, showing preferred dimensions and ratios of lengths. Fig. 8b shows that the end of cup 38 closest to the tip 12 of wall plug 1 is preferably positioned at a distance c from tip 12, said distance c preferably being about 8% to about 10% of plug length G, measured from the tip 12.

Fig. 8b also shows that the end of cup 38 closest to the end or flange 6 of wall plug 1 is preferably positioned at a distance d, said distance d being approximately 15% to about 18% of plug length G, measured from the tip 12.

Fig. 8b also shows that length e along rotational axis X is preferably about 6% to about 9% of the total length G of wall plug 1.

Fig. 8b also shows that the total length f of the lowermost ledge or section 19d of the land of cutting teeth 18, 20, measured along rotational axis X, is preferably about 7% to about 10% of the total length G of wall plug 1.

Fig. 8b also shows that length f is preferably approximately equal to length e, and that length f is even more preferably 1.1 to 1.2 times length e.

Fig. 8b also shows that it is preferred that distance g between the bottom edge of the lowermost section 19d of the land, facing flange 6, and the tip of cutting edge 18b closest along rotational axis X is preferably equal to about 1.5 to 2 times distance f.

Fig. 8c shows a partial view of the wall plug in Figs. 1 - 6 for showing preferred dimensioning. According to Fig. 8c, it is preferred that the length h of cutting edges 18b and 20b of cutting teeth 18 and 20 is equal to approximately 28% to 32% of the diameter i of the wall plug, measured in the front region A of wall plug 1. According to Fig. 8c, it is further preferred that the angle γ between cutting edge 18b and the slope of the lower edge 50 of the land, facing away from the tip 12 of wall plug 1, is between about 100 degrees and about 115 degrees.

Figs. 8d - 8g show perspective partial views onto the front end of the wall plug in Figs. 1 - 6, with tip 12. Fig. 8d shows that the relative angle B1 between the slope of that part of section 19c lying between ledges 19b and 19d of the land of cutting tooth 18, and rotational axis X, is about 35 degrees.

Fig. 8e shows that the angle B2 by which the upper part of section 19c of the land of cutting tooth 18 is inclined relative to section 19a of the land is approximately 130 degrees.

Fig. 8f shows that the uppermost edge of the sloping section 19c of the land of cutting tooth 18 connecting the cutting edge 18b of cutting tooth 18 to the portion below cone 12a of wall plug 1 forms an angle B3 of approximately 30 degrees with rotational axis X.

Fig. 8g shows that the upper part of section 19c of the land of cutting tooth 18 is inclined by an angle B4 of approximately 130 degrees relative to the rotational axis X of wall plug 1.

## Claims

1. A self-drilling wall plug (1) for screwing into lightweight building materials, in particular into plaster walls, having a sleeve-shaped plug body (4) surrounded by a cutting thread (2), a flange (6) on the rear side, at least one cutting tooth (18, 20) like a milling tool in the region of its front end (10) comprising a tip (12), an inner profile formed along an inner wall (30) by a plurality of longitudinal ribs (32), into which the thread of a fixing element cuts, and in its flange (6) a recess (28) for engaging a driving tool,
comprising a cup (38) for receiving the front end of a fixing element penetrating the wall plug (1) and which is provided in the region of the front end of the latter, **characterised in that** a rotational axis (44) of the cup (38) is non-coaxial with a rotational axis (X) of the wall plug, wherein the rotational axis (44) of the cup (38) is arranged at an angle (α) to the rotational axis (X) of the wall plug (1).

2. The wall plug (1) according to claim 1,
wherein the cup (38) is substantially cone-shaped.

3. The wall plug (1) according to any one of the preceding claims,
wherein substantially only one half of the cup (38) is substantially cone-shaped.

4. The wall plug (1) according to any one of the preceding claims,
wherein the cup (38) is designed such that it resists a fixing element penetrating the wall plug (1) with a greater cut-through resistance on a first side, in particular on a first half, than on a second side, in particular on the second half.

5. The wall plug (1) according to the preceding claim,
wherein the greater cut-through resistance is provided on the one side by a greater wall thickness of the cup (38) compared to the other side.

6. The wall plug (1) according to the preceding claim,
wherein the rotational axis (44) of the cup (38) is arranged at an angle (α) of 5 to 10 degrees, preferably of approximately 6.5 degrees to the rotational axis (X) of the wall plug (1).

7. The wall plug (1) according to any one of the preceding claims,
wherein the cup (38) has at least two preferably non-rotationally symmetric areas (40a, 40b, 40c, 40d) on its inner surface.

8. The wall plug (1) according to any one of the preceding claims,
wherein at least two preferably substantially symmetrically arranged cutting teeth (18, 20) like milling tools are provided in the region of its front end (10) comprising the tip (12).

9. The wall plug (1) according to any one of the preceding claims,
wherein the at least one cutting tooth (18, 20) has an outer surface (18a, 20a) which is substantially flush with an outer surface (8) of the plug body (4), which does not have the thread.

10. The wall plug (1) according to any one of the preceding claims,
wherein the at least one cutting tooth (18, 20) has a land (19a, 19b, 19c, 19d) consisting of at least four sections (19a, 19b, 19c, 19d), wherein at least two of said sections (19a, 19b, 19c, 19d) have surfaces which lie in planes parallel to each other.

11. The wall plug (1) according to any one of the preceding claims,
wherein one end of the longitudinal ribs (32) of the inner profile, facing the tip (12), is arranged at a distance from the tip (12) which is substantially equal to the distance to an end of the cutting thread (2) facing the tip (12).

12. The wall plug (1) according to any one of the preceding claims,
wherein pivotable wall portions (25) are provided in wall openings (24) in the plug body (4), which have a region which projects into an interior space (27) provided inside the inner wall (30) of the plug body (4), such that the wall portions (25) can be pressed outwards into an anchoring position by a fixing element penetrating the wall plug (1).

13. The wall plug (1) according to the preceding claim,
wherein the wall portion (25), on at least the side facing the front end (10) of the wall plug (1), has a linear notch (25a) running substantially circumferentially.

14. The wall plug (1) according to the preceding claim,
wherein the linear notch (25a) forms a hinge-like connection, between the wall portion (25) and the plug body (4), for an at least outwardly directed hinging motion of the wall portion (25).

## Patentansprüche

1. Ein selbstbohrender Wanddübel (1) zum Schrauben in Leichtbaumaterialien, insbesondere in Putzwände, aufweisend einen hüllenförmigen Dübelkörper (4), der von einem Bohrgewinde (2), einem Flansch (6) auf der Rückseite, mindestens einem Schneidzahn (18, 20) vergleichbar einem Mahlwerkzeug im Bereich der Stirnseite (10), der eine Spitze (12) aufweist, einem inneren Profil, das entlang einer inneren Wand (30) durch eine Vielzahl an longitudinalen Rippen (32) gebildet wird, in die das Gewinde eines Befestigungselements schneidet, umgeben ist und in seinem Flansch (6) eine Einbuchtung (28) zum Greifen eines Drehwerkzeugs,
aufweisend eine Buchse (38) zur Aufnahme der Stirnseite eines Befestigungselements, das in den Wanddübel (1) eindringt, und die im Bereich der Stirnseite des letzteren ausgebildet ist,
**dadurch gekennzeichnet, dass** eine Rotationsachse (44) der Buchse (38) ungleichachsig ist mit einer Rotationsachse (X) des Wanddübels, wobei die Rotationsachse (44) der Buchse (38) in einem Winkel (a) zur Rotationsachse (X) des Wanddübels (1) angeordnet ist.

2. Der Wanddübel (1) nach Anspruch 1,
wobei die Buchse (38) im Wesentlichen kegelförmig ausgebildet ist.

3. Der Wanddübel (1) nach einem der vorherigen Ansprüche,
wobei im Wesentlichen nur eine Hälfe der Buchse (38) im Wesentlichen kegelförmig ausgebildet ist.

4. Der Wanddübel (1) nach einem der vorherigen Ansprüche,
wobei die Buchse (38) so ausgebildet ist, dass sie einem Befestigungselement, das in den Wanddübel (1) eindringt, mit einer größeren Schnittfestigkeit auf einer ersten Seite, insbesondere auf einer ersten Hälfe, als auf einer zweiten Seite, insbesondere auf der zweiten Hälfe, widersteht.

5. Der Wanddübel (1) nach dem vorherigen Anspruch,
wobei die größere Schnittfestigkeit auf der einen Seite durch eine größere Wanddicke der Buchse (38) im Vergleich zur anderen Seite bereitgestellt wird.

6. Der Wanddübel (1) nach dem vorherigen Anspruch,
wobei die Rotationsachse (44) der Buchse (38) in einem Winkel (a) von 5 bis 10 Grad, vorzugsweise ungefähr 6,5 Grad, zur Rotationsachse (X) des Wanddübels (1) angeordnet ist.

7. Der Wanddübel (1) nach einem der vorherigen Ansprüche,
wobei die Buchse (38) mindestens zwei vorzugsweise nicht rotationssymmetrische Bereiche (40a, 40b, 40c, 40d) auf seiner inneren Oberfläche aufweist.

8. Der Wanddübel (1) nach einem der vorherigen Ansprüche,
wobei mindestens zwei vorzugsweise im Wesentlichen symmetrisch angeordnete Schneidzähne (18, 20) vergleichbar mit Mahlwerkzeugen in dem Bereich der Stirnseite (10), der die Spitze (12) aufweist, angeordnet sind.

9. Der Wanddübel (1) nach einem der vorherigen Ansprüche,
wobei der mindestens eine Schneidzahn (18, 20) eine äußere Oberfläche (18a, 20a) aufweist, die im Wesentlichen fluchtgerecht ist mit einer äußeren Oberfläche (8) des Dübelkörpers (4), der nicht das Gewinde aufweist.

10. Der Wanddübel (1) nach einem der vorherigen Ansprüche,
wobei der mindestens eine Schneidzahn (18, 20) eine Anschlussfläche (19a, 19b, 19c, 19d) aufweist, die aus mindestens vier Bereichen (19a, 19b, 19c, 19d) besteht, wobei mindestens zwei der Bereiche (19a, 19b, 19c, 19d) Oberflächen aufweisen, die in Ebenen parallel zueinander liegen.

11. Der Wanddübel (1) nach einem der vorherigen Ansprüche,
wobei ein Ende der longitudinalen Rippe (32) des inneren Profils, zugewandt zur Spitze (12), an einem Abstand von der Spitze (12) angeordnet ist, der im Wesentlichen gleich ist zum Abstand zu einem Ende des Schneidgewindes (2), dass der Spitze (12) zugewandt liegt.

12. Der Wanddübel (1) nach einem der vorherigen Ansprüche,
wobei drehbare Wandteile (25) in Wandöffnungen (24) im Dübelkörper (4) ausgebildet sind, die einen Bereich aufweisen, der in einen inneren Raum (27), der innerhalb der Wand (30) des Dübelkörpers (4) ausgebildet ist, hineinragt, sodass die Wandteile (25) nach außen in eine Verankerungsposition durch ein Befestigungselement, das in den Wanddübel (1) eindringt, gedrückt werden können.

13. Der Wanddübel (1) nach dem vorherigen Anspruch,
wobei der Wandteil (25), auf mindestens der Seite zugewandt zur Stirnseite (10) des Wanddübels (1), eine lineare Kerbe (25a) aufweist, die im Wesentlichen ringsum verläuft.

14. Der Wanddübel (1) nach dem vorherigen Anspruch,
wobei die lineare Kerbe (25a) eine drehgelenkähnliche Verbindung bildet, zwischen dem Wandteil (25) und dem Dübelkörper (4), für eine zumindest nach außen gerichtete Abklappbewegung des Wandteils (25).

## Revendications

1. Cheville murale (1) auto-foreuse destinée à être vissée dans des matériaux de construction légers, en particulier dans des murs de plâtre, ayant un corps de cheville en forme de manchon (4) entouré d'un filetage de coupe (2), une bride (6) sur le côté arrière, au moins une dent de coupe (18, 20) comme un outil de fraisage dans la région de son extrémité avant (10) comprenant une pointe (12), un profil intérieur formé le long d'une paroi intérieure (30) par une pluralité de nervures longitudinales (32), dans lesquelles le filetage d'un élément de fixation se coupe, et dans sa bride (6) un évidement (28) destiné à venir en prise avec un outil d'entraînement,
comprenant une coupelle (38) destiné à la réception de l'extrémité avant d'un élément de fixation pénétrant dans la cheville murale (1) et qui est prévue dans la région de l'extrémité avant de celle-ci,
**caractérisée en ce qu'**un axe de rotation (44) de la coupelle (38) n'est pas coaxial avec un axe de rotation (X) de la cheville murale, dans laquelle l'axe de rotation (44) de la coupelle (38) est agencé à un angle (α) par rapport à l'axe de rotation (X) de la cheville murale (1).

2. Cheville murale (1) selon la revendication 1,
dans laquelle la coupelle (38) est sensiblement en forme de cône.

3. Cheville murale (1) selon l'une quelconque des revendications précédentes,
dans laquelle sensiblement seulement une moitié de la coupelle (38) est sensiblement en forme de cône.

4. Cheville murale (1) selon l'une quelconque des revendications précédentes,
dans laquelle la coupelle (38) est conçue de sorte qu'elle résiste à un élément de fixation pénétrant dans la cheville murale (1) avec une plus grande résistance à la coupure sur un premier côté, en particulier sur une première moitié, que sur un second côté, en particulier sur la seconde moitié.

5. Cheville murale (1) selon la revendication précédente,
dans laquelle la plus grande résistance à la coupure est prévue sur un côté par une plus grande épaisseur de paroi de la coupelle (38) par rapport à l'autre côté.

6. Cheville murale (1) selon la revendication précédente,
dans laquelle l'axe de rotation (44) de la coupelle (38) est agencé selon un angle (α) de 5 à 10 degrés, de préférence d'environ 6,5 degrés par rapport à l'axe de rotation (X) de la cheville murale (1).

7. Cheville murale (1) selon l'une quelconque des revendications précédentes,
dans laquelle la coupelle (38) a sur sa surface intérieure au moins deux zones (40a, 40b, 40c, 40d) de préférence non symétriques en rotation.

8. Cheville murale (1) selon l'une quelconque des revendications précédentes,
dans laquelle au moins deux dents de coupe (18, 20) agencées de préférence de manière sensiblement symétrique comme des outils de fraisage sont prévues dans la région de son extrémité avant (10) comprenant la pointe (12).

9. Cheville murale (1) selon l'une quelconque des revendications précédentes,
dans laquelle l'au moins une dent de coupe (18, 20) a une surface extérieure (18a, 20a) qui sensiblement affleure une surface extérieure (8) du corps de cheville (4), qui n'a pas de filetage.

10. Cheville murale (1) selon l'une quelconque des revendications précédentes,
dans laquelle l'au moins une dent de coupe (18, 20) a un méplat (19a, 19b, 19c, 19d) constitué par au moins quatre sections (19a, 19b, 19c, 19d), dans laquelle au moins deux parmi lesdites sections (19a, 19b, 19c, 19d) ont des surfaces situées dans des plans parallèles entre eux.

11. Cheville murale (1) selon l'une quelconque des revendications précédentes,
dans laquelle une extrémité parmi les nervures longitudinales (32) du profil intérieur, faisant face à la pointe (12), est agencée à une distance de la pointe (12) qui est sensiblement égale à la distance d'une extrémité du filetage de coupe (2) faisant face à la pointe (12).

12. Cheville murale (1) selon l'une quelconque des revendications précédentes,
dans laquelle des parties de paroi (25) pivotantes sont prévues dans des ouvertures de paroi (24) dans le corps de cheville (4), qui ont une région qui fait saillie dans un espace intérieur (27) prévu à l'intérieur de la paroi intérieure (30) du corps de cheville (4), de sorte que les parties de paroi (25) peuvent être pressées vers l'extérieur dans une position d'ancrage par un élément de fixation pénétrant dans la cheville murale (1) .

13. Cheville murale (1) selon la revendication précédente,
dans laquelle la partie de paroi (25), sur au moins le côté faisant face à l'extrémité avant (10) de la cheville murale (1), a une encoche linéaire (25a) s'étendant de manière sensiblement circonférentielle.

14. Cheville murale (1) selon la revendication précédente,
dans laquelle l'encoche linéaire (25a) forme une liaison articulée, entre la partie de paroi (25) et le corps de cheville (4), destinée à un mouvement d'articulation au moins dirigé vers l'extérieur de la partie de paroi (25).
